# EUROPÄISCHE PATENTSCHRIFT

(11) **EP 0 589 833 B1**
(45) Veröffentlichungstag und Bekanntmachung des Hinweises auf die Patenterteilung: **22.11.1995**
(21) Anmeldenummer: 93810628.3
(22) Anmeldetag: 01.09.1993
(51) Int. Cl.: B26F 1/24, C02F 3/20, B01F 3/04

(54) **Verfahren und Vorrichtung zum Herstellen einer Begasungsmembrane**
Method and apparatus for the manufacture of a gasifying membrane
Procédé et dispositif de fabrication de membranes de gazéification

(30) Priorität: 22.09.1992 DE 4231696
(43) Veröffentlichungstag der Anmeldung: 30.03.1994
(73) Patentinhaber: Huber + Suhner AG Kabel-, Kautschuk-, Kunststoffwerke, CH-8330 Pfäffikon (CH)
(72) Erfinder: Müller, Konrad, CH-8610 Uster (CH)
(74) Vertreter: Hepp, Dieter

(56) Entgegenhaltungen:
- EP-A- 0 174 429
- DE-C- 3 316 140
- GB-A- 2 138 758
- US-A- 4 964 992

## Beschreibung

Die Erfindung betrifft ein Verfahren zum Perforieren von Flächenbegasungs-Membranen aus einem elastischen Material mit einem etwa scheibenförmigen Begasungsfeld sowie eine Vorrichtung zum Erzeugen eines Begasungsfelds in einer Flächenbegasungs-Membrane. Flächenbegaser zum feinblasigen Belüften von Wasser, insbesondere Abwasser sind in den verschiedensten Ausführungsformen bekannt und gebräuchlich. Dabei wird in der Regel zwischen ein scheibenförmiges Trägerelement und eine darüber gespannte, mit kleinen Oeffnungen versehene Membran Druckluft eingeblasen. Die Membran wird gespannt und die Druckluft tritt in vielen kleinen Bläschen durch die Oeffnungen oder Poren der Membran in die darüberliegende Flüssigkeit aus. Bei einem Flächenbegaser für Abwasser gemäss DE-PS-3316140 wird eine elastische Begasungsmembran vorgeschlagen, die sich nach dem Abschalten der Druckluftquelle derart an das Trägerelement anlegen soll, dass durch den Druck des Abwassers eine Dichtwirkung eintreten soll. Dadurch soll verhindert werden, dass Abwasser in die Druckluftleitung eindringt. Beim Flächenbegaser gemäss EP-PS-174 429 wird die Verwendung einer Membran vorgeschlagen, deren Oeffnungen oder Poren sich beim Abstellen der Druckluftquelle elastisch wieder schliessen. Auch damit soll verhindert werden, dass Abwasser in die Druckluftleitung eintritt.

In der Praxis hat sich gezeigt, dass die Herstellung der Begasungs-Oeffnungen in der Membran mit Schwierigkeiten verbunden ist. An diese Oeffnungen werden nämlich relativ hohe Anforderungen gestellt: Sie sollen möglichst gleichmässig geformt sein, um gleichmässigen Gasdurchtritt und gleichmässige Oeffnungs- bzw. Schliessbedingungen zu gewährleisten. Ausserdem ist wünschenswert, dass sie in relativ geringem Abstand voneinander angeordnet sind, um ein möglichst homogenes Blasenbild zu erreichen. Auf der anderen Seite ergeben sich Schwierigkeiten, diesen Anforderungen durch herkömmliche Verfahren gerecht zu werden. So ergibt sich z.B. beim herstellungsmässigen Anbringen von solchen Oeffnungen (z.B. beim Formen in einem Werkzeug) ein komplizierter Werkzeugaufbau, der relativ grossen Abstand der Begasungsöffnungen fordert. Auch beim Stanzen der Löcher durch eine Vielzahl von parallel angeordneten Stanzstempeln ergibt sich ein kompliziertes Herstellungsverfahren, das einerseits Pressen mit hohem Schliessdruck erfordert und bei dem andererseits durch die parallel in Eingriff stehenden Stanzstempel während des Stanzvorgangs eine Verformung der Membran bewirkt wird, die ungleichmässige Lochbildung zur Folge haben kann. Ausserdem ergeben sich relativ grosse Lochabstände. Diese Probleme ergeben sich praktisch bei allen im Einsatz befindlichen Materialien, wie insbesondere Membranen oder Folien aus Kunststoff, Gummi (z.B. EDPM) oder anderen flexiblen und/oder elastischen Werkstoffen.

Zur Herstellung der Filterporen einer Filtermembran ist es aus der US-4,964,992 bereits bekannt, eine Kunststoffolie mit einer Walze zu behandeln, an deren Aussenfläche eine Vielzahl von radial abstehenden, spitzen Nadeln angebracht sind. Diese Nadelwalze wird über die zu behandelnde Kunststoffolie gerollt, wobei die Nadeln in die Folie eindringen und dadurch Filterporen erzeugt werden. Diese Walze erstreckt sich über die gesamte Breite der zu behandelnden Kunststoff-Bahn und eine Vielzahl von Nadeln sind gleichzeitig mit der Kunststoffolie in Eingriff, so dass diese auf ihrer gesamten Breite in einem Arbeitsgang bearbeitet werden kann. Auch hier ist somit der Abstand zwischen den erzeugten Poren durch das verwendete Werkzeug (die Nadeldichte) festgelegt. Ausserdem ist der erforderliche Anpressdruck der Nadelwalze gross, da viele Nadeln gleichzeitig im Eingriff sind.

Aufgabe der Erfindung ist es, die Nachteile des Bekannten zu vermeiden, insbesondere also ein Verfahren und eine Vorrichtung zum Herstellen einer Flächenbegasungsmembrane zu schaffen, das es erlaubt, auf einfache und wirtschaftliche Weise Gasdurchtrittsöffnungen in Flächenbegasungsmembranen in kontrollierbarer, gleichmässiger Grösse und Form sowie in praktisch beliebig dichtem Abstand zu erzeugen.

Erfindungsgemäss wird diese Aufgabe in erster Linie gemäss Kennzeichen der unabhängigen Patentansprüche erreicht.

Durch den Einsatz von Perforationseinrichtungen mit einer Mehrzahl von Perforationswerkzeugen die aber sequentiell in Einsatz mit der Membran kommen, wird vor allem hohe Dichte und grosse Bearbeitungsgeschwindigkeit gewährleistet, ohne dass der Nachteil von parallel arbeitenden Werkzeugen (vor allem Deformation der Membran, hohe Drücke und grosser Lochabstand) in Kauf zu nehmen wäre.

Die Anordnung von spiralförmigen Perforationsbahnen ergibt nicht nur kontinuierliche Bearbeitungsmöglichkeit, sondern auch die Möglichkeit, extrem geringe Lochabstände durch geringe Spiralsteigung zu erzielen. Dies gilt vor allem dann, wenn die Perforationswerkzeuge in einer einzigen Reihe sequentiell nacheinander mit der Membran in Eingriff gebracht werden, d.h. also wenn sie z.B. radial auf einer scheibenförmigen Perforationseinrichtung angeordnet sind, die über die Membran spiralförmig gerollt wird.

Ersichtlicherweise ist es jedoch auch möglich, z.B. zwei oder drei derartiger Reihen von Perforationswerkzeugen nebeneinander anzuordnen, um gleichzeitig einige nebeneinanderliegende Perforationen anzubringen. Vor allem wenn geringe Lochabstände gewünscht werden, wird sich dies in der Praxis auf wenige Reihen beschränken.

In der Praxis haben sich derartige Membranen besonders bewährt, wenn sie in Bahnen mit einem Lochabstand von mehr als 1,5 und weniger als 4,5 mm perforiert sind. Besonders vorteilhaft sind Lochabstände zwischen 2 und 3 mm. Diese Lochabstände lassen sich einerseits verfahrens- und vorrichtungsmässig noch bewältigen und ergeben andererseits eine besonders gleichmässige und dichte Blasenbildung auf der Oberfläche der Membran.

In diesem Zusammenhang haben sich Perforationswerkzeuge mit einem Aussendurchmesser von 40 mm - 90 mm bewährt. Vor allem beim Perforieren von Membranen aus EDPM mit einer Dicke von 1,5 mm - 4 mm haben sich Perforationsnadeln mit einem Durchmesser von 1,0 mm - 1,5 mm besonders gut bewährt.

Vorrichtungsmässig lässt sich die Perforationseinrichtung besonders einfach realisieren, wobei hohe Perforationsgeschwindigkeiten möglich sind, wenn die Perforationseinrichtung eine um ihre Mittelachse rotierende Scheibe ist, auf der eine Mehrzahl von Perforationswerkzeugen befestigt sind, wobei die Scheibenachse unter einem spitzen Winkel zur Ebene der Membran verläuft und wobei die Längsachsen der Perforationswerkzeuge zur Rotationsachse der Scheibe derart geneigt sind, dass die einzelnen Perforationswerkzeuge durch Drehen der Scheibe sequentiell in eine etwa senkrecht zur Ebene der Membranfläche verlaufende Lage bringbar sind. Zur Erzeugung einer spiralförmigen Perforationsbahn ist dabei wenigstens eine Antriebseinrichtung zur Erzeugung einer Relativbewegung zwischen Perforationseinrichtung und Membranfläche vorgesehen.

Die Antriebseinrichtung lässt sich dabei einfach verwirklichen, wenn sie einen Drehteller für die Membran und wenigstens eine radialle Vorschubeinrichtung zum Verlagern der Perforationseinrichtung etwa entlang einer Radius-Linie des Drehtellers aufweist.

Als Perforationswerkzeuge eignen sich besonders gut Metallnadeln. Zur Anpassung an Strömungsbedingungen oder zur Veränderung des Oeffnungsverhaltens der Löcher kann es auch vorteilhaft sein, wenn die Nadeln messer- oder lanzettenartig oder sternförmig angeschliffen sind.

Die Erfindung ist im folgenden in Ausführungsbeispielen anhand der Zeichnungen näher erläutert. Es zeigen:
- Fig.1a und 1b: die schematische Darstellung einer Flächenbegasungsmembran in Seitenansicht und in Draufsicht,
- Fig.2a und 2b: eine Flächenbegasungsmembran mit abgewandelter Perforation,
- Fig. 3: die schematische Darstellung einer Vorrichtung zum Erzeugen eines Begasungsfelds in einer Flächenbegasungs-Membran,
- Fig. 4: die Seitenansicht einer Perforationseinrichtung mit den Merkmalen der Erfindung,
- Fig. 5: eine Ansicht der Perforationseinrichtung gemäss Figur 4 von vorne und
- Fig. 6: ein abgewandeltes Ausführungsbeispiel einer Perforationseinrichtung gemäss Figur 4.

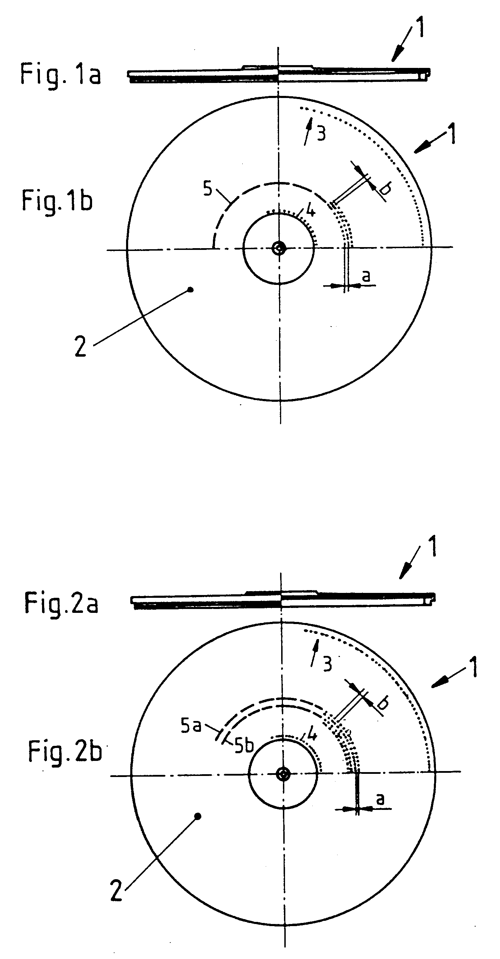

Gemäss Figur 1 weist eine scheibenförmige Flächenbegasungs-Membran 1 ein Begasungsfeld 2 auf, das von einer äusseren Lochbahn 3 und einer inneren Lochbahn 4 begrenzt wird. Die einzelnen Löcher verlaufen in einer ununterbrochenen spiralförmigen Bahn 5, wie dies in Figur 1b schematisch angedeutet ist.

Der Abstand a zwischen nebeneinanderliegenden Bahnen sowie der Abstand b zwischen aufeinanderfolgenden Löchern oder Perforationen beträgt 2,5 mm, wobei auf der Membran 1 insgesamt ca. 30.000 einzelne Löcher vorgesehen sind.

Beim Ausführungsbeispiel gemäss Figur 2a und 2b sind auf der Membran 1 zwei parallel zueinander verlaufende spiralförmige Bahnen 5a und 5b, die im Abstand voneinander von der äusseren Lochbahn 3 bis zur inneren Lochbahn 4 kontinuierlich und spiralförmig verlaufen. Der Abstand der beiden Lochbahnen 5a und 5b sowie der Abstand zu den nächstfolgenden Bahnen a sowie der Abstand b von je zwei aufeinanderfolgenden Oeffnungen oder Perforationen beträgt 2 mm gleichmässig über das gesamte Begasungsfeld 2. Die Gesamtzahl der Oeffnungen oder Perforationen beträgt ca. 20.000. Je nach Anwendungsfall und Grösse der Membranen kann der Lochabstand und die Anzahl der Perforationen variieren.

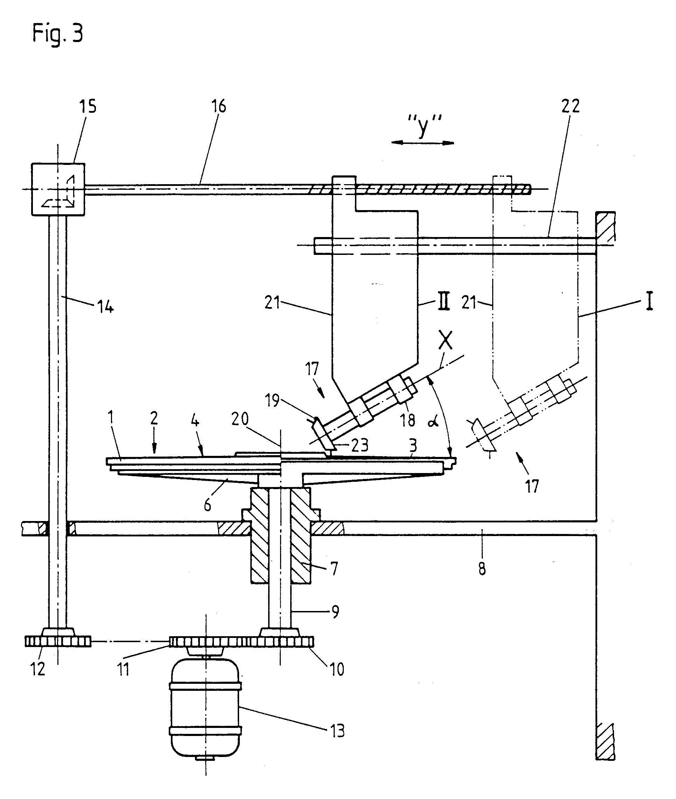

Figur 3 zeigt eine Vorrichtung zum Erzeugen des Begasungsfelds 2 (Figur 1 und 2) in der Membran 1, welche zur Bearbeitung auf einen Drehteller 6 gespannt ist. Der Drehteller 6 ist in einer Lagereinrichtung 7 auf einem Rahmen 8 gehalten. Zum Antrieb des Drehtellers 6 ist eine Antriebsachse 9 vorgesehen, die über Zahnräder 10 und 11 mit einem Antriebsmotor 13 in Verbindung steht. Der Antriebsmotor 13 ist ausserdem über Zahnrad 11, eine nicht dargestellte Getriebe-Verbindung, Zahnrad 12, Welle 14, ein Getriebe 15 und eine schematisch dargestellte Vorschubspindel 16 mit einer Perforationseinrichtung 17 verbunden.

Die Antriebsverbindung zwischen dem Antriebsmotor 13 und dem Drehteller 6 einerseits bzw. der Perforationseinrichtung 17 andererseits ist dabei nicht zwangssynchronisiert. Darunter ist zu verstehen, dass die in Lageranordnung 18 verdrehbare Perforationseinrichtung 17 frei um ihre Achse X gedreht wird, dass sich die Oberfläche 19 der Perforationseinrichtung 17 auf der rotierenden Membran schlupffrei abwälzt, unabhängig davon, in welchem Abstand vom Zentrum 20 sich die Oberfläche 19 der Perforationseinrichtung 17 jeweils befindet. Dies wird dadurch erreicht, dass die sich in die Membran einstechenden Nadeln 15 den Kopf 23 der Perforationseinrichtung beim Rotieren des Drehtellers 6 weiterdrehen. Die Perforationseinrichtung 17 wird in einer Halterung 21 gehalten, die in Richtung des Pfeils Y linear aus einer Anfangsposition II in eine Endposition I, d.h. radial nach aussen verschiebbar ist. Dazu ist die Halterung 21 an einer Linearführung 22 befestigt.

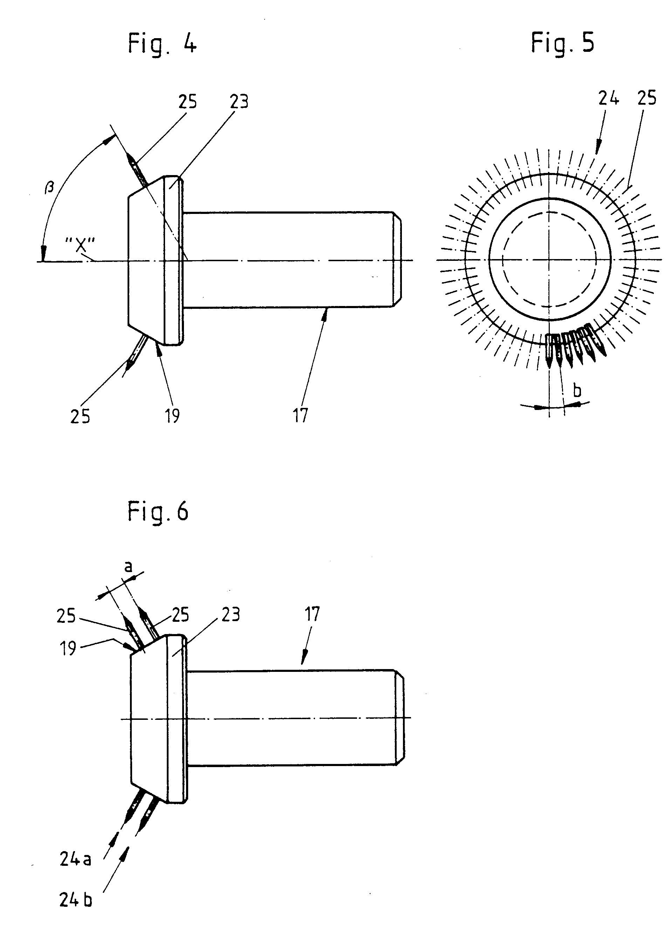

Die Perforationseinrichtung 17 weist einen scheibenförmigen Kopf 23 auf, der konisch zuläuft und die Oberfläche 19 bildet. In der Oberfläche 19 ist eine kreisförmig angeordnete Reihe 24 von Nadeln 25 befestigt (Figur 4 und 5). Die Nadeln 25 sind unter einem spitzen Winkel β schräg zur Achse X der Perforationseinrichtung 17 angeordnet und die Perforationseinrichtung 17 ist ihrerseits unter einem spitzen Winkel α schräg zur Oberfläche der Membran 1 angeordnet. Die beiden Winkel α und β sind dabei derart dimensioniert, dass die Nadeln 25 jeweils in eine senkrechte Lage zur Membran 1 bringbar sind - und zwar dann, wenn sie am tiefsten in die Membran 1 eindringen.

Im Betriebsablauf wird zur Erzeugung eines Begasungsfelds 2 in der Membran 1 zunächst die Perforationseinrichtung mit Hilfe der Linearführung 22 in den Bereich der inneren Lochbahn 4 der Membran 1 gebracht und dort derart gegen die Membran 1 gepresst, dass die gegen die Membran 1 gerichtete Reihe von Nadeln 25 die Membran 1 durchsticht. Kopf 23 und Drehteller 6 rotieren dabei wie vorstehend beschrieben synchron, so dass die Oberfläche 19 mit der Nadelreihe 24 auf dem rotierenden Drehteller 6 bzw. auf der Membran 1 abwälzt und dabei eine Lochbahn erzeugt. Gleichzeitig wird die Linearführung 22 angetrieben, so dass die erzeugte Lochbahn spiralförmig zum Zentrum 20 der Membran 1 hin erzeugt wird.

Durch Einstellen der Vorschubgeschwindigkeit der Linearführung 22 lässt sich ersichtlicherweise unter Berücksichtigung der Rotationsgeschwindigkeit des Drehtellers 6 die Steigung der erzeugten Lochspirale beeinflussen. Der Abstand der einzelnen Löcher in der Membran 1 kann durch Verwendung verschiedener Köpfe 23 mit unterschiedlichem Abstand zwischen den Nadeln 25 erreicht werden.

Figur 6 zeigt einen abgewandelten Kopf 23 mit zwei parallel nebeneinander angeordneten Reihen 24a, 24b von Nadeln 25, mit denen sich eine Doppelspirale von Lochbahnen 5a, 5b (Figur 2b) erzeugen lässt.

## Patentansprüche

1. Verfahren zum Herstellen einer Flächenbegasungs-Membran (1) mit einem etwa scheibenförmigen Begasungsfeld (2) aus einem elastischen und/oder flexiblen Material, wobei eine rotierende Perforationseinrichtung (17) mit einer Mehrzahl von Perforationswerkzeugen (25) über die Oberfläche der Membran (1) verlagert und die Membran (1) dabei sequentiell durchstochen wird, dadurch gekennzeichnet, dass die Perforationswerkzeuge (25) entlang wenigstens einer spiralförmigen Perforationsbahn (5, 5a, 5b) verlagert werden.

2. Verfahren nach Anspruch 1, dadurch gekennzeichnet, dass bei jeder Umdrehung des Perforationswerkzeugs (17) eine Mehrzahl von Perforationen in wenigstens einer Bahn (5, 5a, 5b) erzeugt wird.

3. Verfahren nach Anspruch 1 oder 2 mit einem Perforationswerkzeug (17) mit etwa konisch verlaufender Oberfläche (19) auf der eine Mehrzahl von Perforationswerkzeugen (25) etwa ringförmig angeordnet ist, dadurch gekennzeichnet, dass die Perforationseinrichtung um ihre Längsachse X rotierend mit der Oberfläche (19) auf der Membran (1) abgewälzt wird, wobei die Perforationseinrichtung (17) und die Membran (1) relativ zueinander sowohl entlang einer Kreisbahn als auch gleichzeitig entlang einer etwa radial zum Membranmittelpunkt gerichteten Bahn derart verlagert werden, dass sich eine spiralförmige Abwälzung der Oberfläche (19) auf der Membran (1) ergibt.

4. Verfahren nach einem der vorangegangenen Ansprüche, dadurch gekennzeichnet, dass die Membran (1) spiralförmig von einer inneren Lochbahn (4) her in Richtung einer äusseren Lochbahn (3) durch die Perforationswerkzeuge (25) durchstochen wird.

5. Verfahren nach einem der vorangegangenen Ansprüche, dadurch gekennzeichnet, dass die Membran (1) entlang wenigstens zwei spiralförmig verlaufender Bahnen (5a, 5b) durchstochen wird.

6. Verfahren nach einem der vorangegangenen Ansprüche, dadurch gekennzeichnet, dass die Membran (1) in Bahnen (5, 5a, 5b) mit einem Lochabstand von mehr als 1,5 mm und weniger als 4,0 mm durchstochen wird.

7. Vorrichtung zum Erzeugen eines Begasungsfelds (2) in einer Flächenbegasungs-Membran (1) aus einem elastischen oder flexiblen Material, mit einer um eine Längsachse X rotierenden Perforationseinrichtung (17) mit einer Mehrzahl von Perforationswerkzeugen (25), die entlang einer Kreisbahn auf einer der Membran (1) zugerichteten Oberfläche (19) derart angeordnet sind, dass sie durch Drehen der Perforationseinrichtung (17) sequentiell in eine etwa senkrecht zur Ebene der Membranfläche (1) verlaufende Lage bringbar sind, wobei zum Erzeugen einer Relativbewegung zwischen Perforationseinrichtung und Membranfläche wenigstens eine Antriebseinrichtung vorgesehen ist, dadurch gekennzeichnet, dass die Rotationsachse X der Perforationseinrichtung (17) unter einem spitzen Winkel α zur Ebene der Membran (1) angeordnet ist und die Längsachsen der Perforationswerkzeuge (25) zur Rotationsachse X der Perforationseinrichtung (17) unter einem zweiten Winkel β ebenfalls derart geneigt sind, und dass die Perforationseinrichtung (17) durch die Antriebseinrichtung (13) entlang einer spiralförmigen Bahn (5, 5a, 5b) auf der Oberfläche der Membran(1) führbar ist.

8. Vorrichtung nach Anspruch 7, dadurch gekennzeichnet, dass die Antriebseinrichtung (13) einen Drehteller (6) für die Membran (1) und wenigstens eine radialle Vorschubeinrichtung (22) zum Verlagern der Perforationseinrichtung (17) etwa entlang einer Radius-Linie des Drehtellers (6) aufweist.

9. Vorrichtung nach Anspruch 8, dadurch gekennzeichnet, dass die Perforationswerkzeuge (25) Metallnadeln sind.

10. Vorrichtung nach einem der Ansprüche 7 bis 9, dadurch gekennzeichnet, dass die Perforationseinrichtung (17) frei drehbar in einer Lageranordnung (18) gelagert und durch Eingriff in die rotierende Membrane (1) antreibbar ist.

## Claims

1. Method of manufacturing a surface type aeration membrane (1) with an approximately disc shaped aeration field of an elastic and/or flexible material, a rotating perforation device (17) with a plurality of perforating tools (25) displacing above the surface of the membrane (1) and sequentially perforating said membrane (1), characterized in that the perforation tools (25) are displaced along at least one spiral-shaped perforation line (5, 5a, 5b).

2. Method according to claim 1, characterized in that, on each rotation of the perforation tool (17), a plurality of perforations will be created in at least one line (5, 5a, 5b).

3. Method according to claim 1 or 2 with a perforation tool (17) with a surface running approximately conically (19) on which a plurality of perforation tools (25) are arranged approximately annularly, characterized in that the perforation device, rotating about its longitudinal axis X, is rolled with its surface (19) on the membrane, the perforation device (17) and the membrane (1) being displaced relative to one another not only along a circular line but also simultaneously along a line aligned approximately radially to the centre point of the membrane in such a way that a spiral shaped rolling of the surface (19) on the membrane (1) will result.

4. Method according to one of the preceding claims, characterized in that the membrane (1) is perforated in a spiral shape from an inner line of holes (4) in the direction of an outer line of holes (3) by means of the perforation tool (25).

5. Method according to one of the preceding claims, characterized in that the membrane (19 is perforated along at least two spiral shaped lines (5a, 5b).

6. Method according to one of the preceding claims, characterized in that the membrane (1) is perforated in lines (5, 5a, 5b) with a hole-spacing greater than 1,5 mm and less than 4,00 mm.

7. Device for creating an aeration field (2) in a surface type aeration membrane (1) of an elastic and/or flexible material, with a perforation device (17), said perforation device rotating around a longitudinal axis X and possessing a plurality of perforation tools (25), said perforation tools arranged along a circular line on a surface (19) oriented towards the membrane (1) in such a way that, through rotation of the perforation device (17) they are able to be sequentially brought into a position approximately vertical to the plane of the membrane surface (1), at least one drive device being provided for the creation of a relative movement between perforation device and membrane surface, characterized in that the rotational axis X of the perforation device (17) is arranged at an acute angle α to the plane of the membrane (1) and the longitudinal axes of the perforation tools (25) are likewise inclined at a second angle β relative to the rotational axis X of the perforation device (17) in such a way that the perforation device (17) can be guided by the drive device (13) along a spiral shaped line (5, 5a, 5b) on the surface of the membrane (1).

8. Device according to claim 7, characterized in that the drive device (13) possesses a turn table (6) for the membrane (1) and at least one radial feed device (22) for displacement of the perforation device (17) approximately along a radius line of the turntable (6).

9. Device according to claim 8, characterized in that the perforation tools (25) are metal needles.

10. Device according to one of the claims 7 to 9, characterized in that the perforation device (17) is mounted in a bearing arrangement (18) to freely rotate and can be driven by means of engagement in the rotating membrane.

## Revendications

1. Procédé pour fabriquer une membrane de gazéification superficielle (1) comportant une zone de gazéification sensiblement en forme de disque (2) en matériau élastique et/ou flexible, selon lequel un dispositif de perforation tournant (17) pourvu d'une multiplicité d'outils de perforation (25) est amené sur la surface de la membrane (1) et la membrane (1) est percée de façon séquentielle, caractérisé en ce que les outils de perforation (25) sont déplacés suivant au moins une trajectoire de perforation en spirale (5, 5a, 5b).

2. Procédé selon la revendication 1, caractérisé en ce qu'à chaque tour de l'outil de perforation (17), une multiplicité de perforations sont réalisées en au moins une bande (5, 5a, 5b).

3. Procédé selon la revendication 1 ou 2 avec un outil de perforation (17) présentant une surface (19) s'effilant sensiblement en cône sur laquelle sont disposés suivant une forme sensiblement annulaire une multiplicité d'outils de perforation (25), caractérisé en ce que le dispositif de perforation, avec la surface (19), roule en tournant sur son axe longitudinal X sur la membrane (1), moyennant quoi le dispositif de perforation (17) et la membrane (1) sont déplacés l'un par rapport à l'autre, non seulement suivant une trajectoire circulaire mais aussi, simultanément, suivant une trajectoire dirigée sensiblement radialement par rapport au centre de la membrane, de telle sorte qu'on obtienne un roulement en spirale de la surface (19) sur la membrane (1).

4. Procédé selon l'une des revendications précédentes, caractérisé en ce que la membrane (1) est percée par les outils de perforation (25) en spirale, d'une bande de trous intérieure (4) vers une bande de trous extérieure (3).

5. Procédé selon l'une des revendications précédentes, caractérisé en ce que la membrane (1) est percée suivant au moins deux trajectoires en spirale (5a, 5b).

6. Procédé selon l'une des revendications précédentes, caractérisé en ce que la membrane (1) est percée en bandes (5, 5a, 5b) présentant un écartement entre les trous supérieur à 1,5 mm et inférieur à 4,0 mm.

7. Dispositif pour réaliser une zone de gazéification (2) dans une membrane de gazéification superficielle (1) en matériau élastique ou flexible, comportant un dispositif de perforation (17) tournant sur un axe longitudinal X et pourvu d'une multiplicité d'outils de perforation (25) qui sont disposés suivant une trajectoire circulaire sur une surface (19) tournée vers la membrane (1), de manière à pouvoir être amenés de façon séquentielle dans une position sensiblement perpendiculaire au plan de la surface de membrane (1) grâce à une rotation du dispositif de perforation (17), étant précisé que pour la production d'un mouvement relatif entre le dispositif de perforation et la surface de membrane, on prévoit au moins un dispositif d'entraînement, caractérisé en ce que l'axe de rotation X du dispositif de perforation (17) est disposé suivant un angle aigu α par rapport au plan de la membrane (1) et les axes longitudinaux des outils de perforation (25) sont également inclinés suivant un second angle β par rapport à l'axe de rotation X du dispositif de perforation (17), et en ce que le dispositif de perforation (17) est apte à être guidé par le dispositif d'entraînement (13) sur la surface de la membrane (1) suivant une trajectoire en spirale (5, 5a, 5b).

8. Dispositif selon la revendication 7, caractérisé en ce que le dispositif d'entraînement (13) comporte un plateau tournant (6) pour la membrane (1), et au moins un dispositif d'avance radiale (22) pour déplacer le dispositif de perforation (17) sensiblement suivant une ligne radiale du plateau tournant (6).

9. Dispositif selon la revendication 8, caractérisé en ce que les outils de perforation (25) sont des aiguilles métalliques.

10. Dispositif selon l'une des revendications 7 à 9, caractérisé en ce que le dispositif de perforation (17) est monté pour pouvoir tourner librement dans un dispositif de support (18) et est apte à être entraîné par l'engagement dans la membrane (1) en rotation.
